# EUROPÄISCHE PATENTSCHRIFT

(11) **EP 0 336 294 B1**
(45) Veröffentlichungstag und Bekanntmachung des Hinweises auf die Patenterteilung: **30.06.1993**
(21) Anmeldenummer: 89105605.3
(22) Anmeldetag: 30.03.1989
(51) Int. Cl.: H02G 5/04, H01R 25/14

(54) **Halter mit Strom-Sammelschienen für ein Sammelschienensystem**
Bus bar support for a bus bar system
Support de barre conductrice pour un système de barre conductrice

(30) Priorität: 06.04.1988 DE 3811458
(43) Veröffentlichungstag der Anmeldung: 11.10.1989
(73) Patentinhaber: Rittal-Werk Rudolf Loh GmbH & Co. KG, 35745 Herborn (DE)
(72) Erfinder: Wagener, Hans, D-6344 Dietzhölztal-Rittershausen (DE)
(74) Vertreter: Jeck, Anton, Dipl.-Ing.

(56) Entgegenhaltungen:
- DE-U- 7 435 327
- US-A- 3 280 245
- US-A- 4 031 433

## Beschreibung

Die Erfindung betrifft einen Halter mit Strom-Sammelschienen für ein Sammelschienensystem zum Anschluß von elektrischen Geräten, der aus einem Isolierträger mit in seine Oberseite eingebrachten Aufnahmen für mehrere, in gleichmäßigen Abständen zueinander darin festgelegten Strom-Sammelschienen-Abschnitten besteht, wobei der Isolierträger mit seinen Aufnahmen rechteckförmig und plattenförmig ausgebildet ist, mit seinen Längsseiten parallel zu den Strom-Sammelschienen-Abschnitten verläuft und sich über den wesentlichen Teil der Länge der Strom-Sammelschienen-Abschnitte erstreckt.

Ein Halter mit Strom-Sammelschienen dieser Art ist aus der US-A 40 31 433 bekannt. Die als Strom-Sammelschienen-Abschnitte ausgebildeten, im Querschnitt U-förmigen Strom-Sammelschienen sind in nutförmigen Aufnahmen des Isolierträgers befestigt, wobei zwischen Nutgrund der Aufnahme und dem Strom-Sammelschienen-Abschnitt ein Endschenkel eines Z-förmigen Verbindungswinkels befestigt ist. An die freien Endschenkel der Verbindungswinkel sind feste Anschlußkontakte des Gerätes angeschraubt. Die Verbindungswinkel und die Anschlußkontakte sind so aufeinander abgestimmt, daß das Gerät an einer Stelle mit den Strom-Sammelschienen verbunden werden kann. An die freie Seite der Strom-Sammelschienen-Abschnitte können Brücken angeschweißt sein, an die senkrecht zu den im Isolierträger verlaufenden Strom-Sammelschienen-Abschnitte verlaufende weitere Strom-Sammelschienen-Abschnitte anschraubbar sind. Der Anschluß von Geräten mit verstellbaren Kontaktbügeln oder Federkontakten an diesem bekannten Halter ist nicht möglich.

Aus der DE-U 74 35 327 ist ein Halter mit im Querschnitt L-förmigen Strom-Sammelschienen-Abschnitten bekannt. Ein zur Oberseite des Isolierträgers paralleler Schenkel wird als Befestigungsschenkel verwendet, während der andere Schenkel senkrecht an der Oberseite des Isolierträgers absteht und als Aufstecksteg für Geräte mit Aufsteckkontakten verwendet wird.

Für Geräte mit verstellbaren Kontaktbügeln oder Federkontakten werden die Strom-Sammelschienen-Abschnitte nur an schmalen Haltern festgelegt, so daß der wesentlichste Teil ihrer Länge freiliegt, wie die DE-C1 36 42 517 und die DE-C1 36 42 518 zeigen. Geräte mit verstellbaren Kontaktbügeln oder Federkontakten können daher die Strom-Sammelschienen-Abschnitte nur zwischen den Haltern hintergreifen. Außerdem ist diese Art Befestigung der Strom-Sammelschienen nicht kurzschlußfest, wenn die schmalen Halter auf einer elektrisch leitenden Befestigungsfläche befestigt sind.

Es ist Aufgabe der Erfindung, einen Halter mit Strom-Sammelschienen der eingangs erwähnten Art zu schaffen, bei dem auch im Bereich des Halters elektrische Geräte mit den im Halter festgelegten Strom-Sammelschienen-Abschnitten verbunden werden können und die Strom-Sammelschienen-Abschnitte praktisch auf der gesamten Länge zur Befestigungsfläche hin abgedeckt und gegen Kurzschlüsse geschützt sind.

Diese Aufgabe wird nach der Erfindung dadurch gelöst, daß die Strom-Sammelschienen-Abschnitte mit einem senkrecht zur Oberseite des Isolierträgers gerichteten Abstandsschenkel an der Oberseite des Isolierträgers abstehen, daß diese Abstandsschenkel an ihren freien Enden in zur Oberseite des Isolierträgers im Abstand stehende und parallel verlaufende Klemmschenkel übergehen und daß Geräte mit verstellbaren Kontaktbügeln oder Federkontakten mit den Strom-Sammelschiene-Abschnitten mechanisch und elektrisch verbindbar sind.

Bei dieser Ausgestaltung der Strom-Sammelschienen-Abschnitte und der Festlegung an dem Isolierträger kann sich derselbe über die gesamte Länge der Strom-Sammelschienen-Abschnitte erstrecken, ohne die Befestigung von elektrischen Geräten an den Klemmschenkeln der Strom-Sammelschienen-Abschnitte zu beeinträchtigen. Der plattenförmige Isolierträger bringt aber zur Befestigungsfläche hin eine eindeutige Abdeckung, so daß eine wesentlich höhere Kurzschlußfestigkeit erreicht ist.

Das Einhalten eines gleichmäßigen Abstandes der Klemmschenkel wird nach einer Ausgestaltung dadurch sichergestellt, daß die Abstandsschenkel der Strom-Sammelschienen-Abschnitte in gleichen Abständen zueinander angeordnet sind und daß die Klemmschenkel aller Strom-Sammelschienen-Abschnitte zu derselben Längsseite des Isolierträgers gerichtet sind.

Für die Festlegung der Strom-Sammelschienen-Abschnitte am Isolierträger ist nach einer Ausgestaltung vorgesehen, daß die Abstandsschenkel der Strom-Sammelschienen-Abschnitte in nutförmigen Aufnahmen des Isolierträgers mittels Paß-und/oder Preßsitz gehalten oder in diese bei der Herstellung des Isolierträgers eingebettet sind.

Denselben Zweck erreicht eine weitere Ausgestaltung, die dadurch gekennzeichnet ist, daß die den Klemmschenkeln abgekehrten Enden der Abstandsschenkel in zu den Klemmschenkeln parallele Befestigungsschenkel übergehen, die in den Aufnahmen mit dem Isolierträger verbunden, vorzugsweise verschraubt sind. Dabei läßt sich der Halt dadurch noch verbessern, daß zumindest ein Teil des Befestigungsschenkels in einem hinterschnittenen Bereich der Aufnahme gehalten ist.

Die fugenlose Aneinanderreihung von Haltern dieser Art für ein erweiterbares Sammelschienensystem wird nach einer einfachen Ausgestaltung dadurch erreicht, daß die Strom-Sammelschienen-Abschnitte bündig mit den Schmalseiten des Isolierträgers abschließen und daß die Strom-Sammelschienen-Abschnitte aneinandergereihter Halter außerhalb der Klemmschenkel mittels Verbindern elektrisch leitend verbindbar sind.

Die Verdrahtung der mit den Strom-Sammelschienen-Abschnitten verbundenen elektrischen Geräten läßt sich dadurch ebenfalls gegen Kurzschlüsse schützen, daß mindestens zwischen benachbarten Strom-Sammelschienen-Abschnitten Durchbrüche in den Isolierträger eingebracht sind, die über quer zu den Strom-Sammelschienen-Abschnitte verlaufende Aussparungen in der Unterseite des Isolierträgers mit den Längsseiten des Isolierträgers verbunden sind.

Die Erfindung wird anhand von in den Zeichnungen dargestellten Ausführungsbeispielen näher erläutert. Es zeigt:
Fig. 1 in Draufsicht den Halter mit drei Z-förmigen Strom-Sammelschienen-Abschnitten,
Fig. 2 einen Querschnitt durch den Halter entlang der Linie II-II der Fig. 1 und
Fig. 3 einen Querschnitt durch einen anders gestalteten Halter mit verschiedenen Strom-Sammelschienen-Abschnitten.

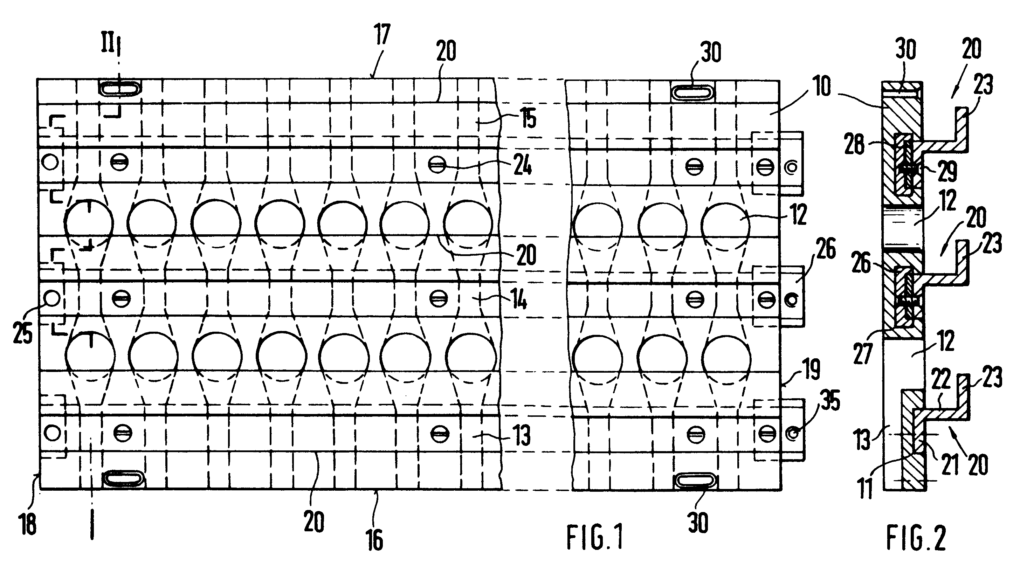

Wie die Fig. 1 und 2 zeigen, erstreckt sich der rechteckförmig und plattenförmig ausgebildete Isolierträger 10 mit den Aufnahmen 11 für die Strom-Sammelschienen-Abschnitte 20 über die gesamte Länge der Strom-Sammelschienen-Abschnitte 20, so daß die Schmalseiten des Isolierträgers 10 bündig mit den Enden der Strom-Sammelschienen-Abschnitte 20 abschließen. Bei dem Ausführungsbeispiel sind die Strom-Sammelschienen-Abschnitte 20 Z-förmig ausgebildet. Dabei ist der eine Querschenkel als Befestigungsschenkel 21 ausgebildet, der in seinem Querschnitt auf den Querschnitt der Aufnahmen 11 ausgelegt ist, so daß der Querschenkel 21 bündig mit der Oberseite des Isolierträgers 10 abschließt. Die Befestigungsschenkel 21 werden mittels Schrauben 24 mit dem Isolierträger 10 verbunden. Die Schraubstellen sind in Längsrichtung der Strom-Sammelschienen-Abschnitte 20 in gleichmäßiger Verteilung angeordnet und in Querrichtung dazu aufeinander ausgerichtet.

Der als Abstandsschenkel 22 ausgebildete Mittelschenkel der Strom-Sammelschienen-Abschnitte 20 legt den Abstand des anderen als Klemmschenkel 23 dienenden Querschenkels der Strom-Sammelschienen-Abschnitte 20 von der Oberseite des Isolierträgers 10 fest. Die Klemmschenkel 23 aller Strom-Sammelschienen-Abschnitte 20 sind nach einer Längsseite, z.B. 17, des Isolierträgers 10 gerichtet, so daß sie wieder dieselben Abstände wie die Aufnahmen 11 im Isolierträger 10 einnehmen, die ja in gleichmäßigen Abständen zueinander in die Oberseite des Isolierträgers 10 eingebracht sind. Die Strom-Sammelschienen-Abschnitte 20 sind damit auf ihrer gesamten Länge zur Befestigungsfläche hin abgedeckt und geschützt und die Klemmschenkel 23 können auf ihrer gesamten Länge mit elektrischen Geräten bestückt werden, die mit den verstellbaren Kontaktbügeln oder Federkontakten elektrisch und mechanisch an diesen Klemmschenkeln 23 festgelegt werden.

Der Isolierträger 10 wird über die Befestigungsaufnahmen 30 für Befestigungsmittel, wie Befestigungsschrauben, an der Befestigungsfläche festgelegt. Diese Befestigungsaufnahmen 30 sind in den Randbereichen der Längsseiten 16 und 17 in den Isolierträger 10 eingebracht.

Damit Isolierträger 10 gleicher Art ohne Trennfuge aneinandergereiht werden können, sind die Aufnahmen 11 im Bereich der Schmalseiten 18 und 19 als Verbinderaufnahme 27 erweitert. Diese Verbinderaufnahmen 27 nehmen die Verbinder 26 zur Hälfte auf. Die Strom-Sammelschienen-Abschnitte 20 tragen im Bereich der Verbinderaufnahmen 27 Bohrungen 25 für die Befestigungsschrauben 29, die in Gewindebohrungen 35 der Verbinder 26 eingeschraubt werden. Die Verbinder 26 können aus elektrisch leitendem Material sein und so die aufeinanderstoßenden Strom-Sammelschienen-Abschnitte 20 aneinandergereihter Halter durchschalten. Die Verbinder 26 können auch aus elektrisch nicht leitendem Material sein, wenn zwischen die Befestigungsschenkel 21 der Strom-Sammelschienen-Abschnitte 20 und den Verbindern 26 elektrisch leitende Kontaktplatten 28 eingebracht werden.

Wie die Fig. 1 und 2 weiterhin zeigen, sind jeweils zwischen den benachbarten Strom-Sammelschienen-Abschnitten Reihen von als Bohrungen ausgebildete Durchbrüche 12 in den Isolierträger 10 eingebracht. Die Bohrungen der Reihen sind quer zur Längsrichtung der Strom-Sammelschienen-Abschnitte 20 ausgerichtet und auf der Unterseite des Isolierträgers 10 durch die als Kabelkanal dienende Aussparung 14 miteinander und über die Aussparungen 13 und 15 mit den Längsseiten 16 und 17 des Isolierträgers 10 verbunden. Die Anschlußleitungen lassen sich daher in regelmäßigen Abständen auf der gesamten Länge der Strom-Sammelschienen-Abschnitte 20 abgedeckt und voneinander getrennt durch die Durchbrüche 12 zu den mit den Klemmschenkeln 23 verbundenen elektrischen Geräte führen. Dadurch wird die Gefahr von Kurzschlüssen im Bereich der Verdrahtung entscheidend reduziert.

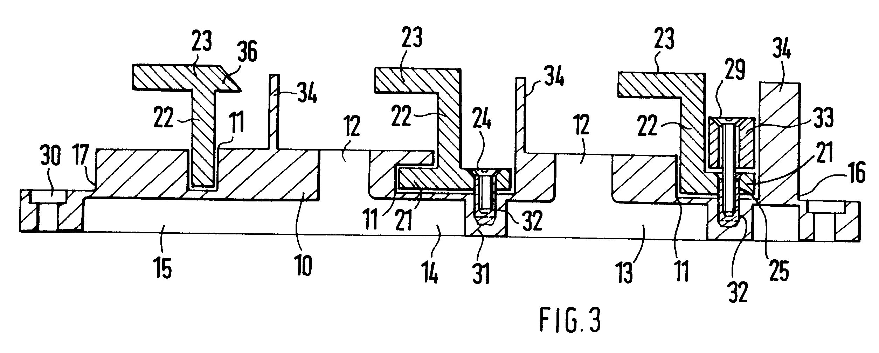

Anhand des Schnittes nach Fig. 3 werden ein anderes Ausführungsbeispiel des Isolierträgers 10 und verschieden gestaltete Strom-Sammelschienen-Abschnitte 20 gezeigt.

Der linke L-förmige Strom-Sammelschienen-Abschnitt 20 kann mit seinem Abstandsschenkel 22 direkt in der Aufnahme 11 festgelegt werden und zwar durch Paß- und/oder Preßsitz. Der Abstandsschenkel 22 kann jedoch auch schon bei der Herstellung des Isolierträgers 10 in diesen eingebettet werden. Dabei könnte zur Verbesserung des Halters der Abstandsschenkel 22 im Bereich der Aufnahme 11 mit Bohrungen versehen sein.

Der rechte Z-förmige Strom-Sammelschienen-Abschnitt 20 wird mit dem Befestigungsschenkel 21 in der Aufnahme 11 befestigt, wobei im Bereich der Schmalseite des Isolierträgers 10 der Befestigungsschenkel 21 die Bohrung 25 für den Verbinder 33 trägt, der mit der Befestigungsschraube 29 in eine Gewindebohrung 32 des Isolierträgers 10 eingeschraubt wird. Der Verbinder 33 erstreckt sich nur über einen Teil des Abstandsschenkels 22 und überbrückt die Stoßstelle zwischen den aufeinanderstoßenden Strom-Sammelschienen-Abschnitten 20 aneinandergereihter Halter.

Wie bei dem mittleren Strom-Sammelschienen-Abschnitt 20 gezeigt ist, wird die Schraube 24, mit der der Befestigungsschenkel 21 in der Aufnahme 11 festgelegt wird, ebenfalls in eine Gewindeaufnahme 32 des Isolierträgers 10 eingeschraubt. Die Gewindeaufnahmen 32 können in den Isolierträger 10 auch durch selbstschneidende Schrauben 24 erst bei dem Befestigen der Strom-Sammelschienen-Abschnitte 20 am Isolierträger 10 eingebracht werden.

Sind die Gewindeaufnahmen 32 in zylinderförmige Ansätze 31 an der Unterseite des Isolierträgers 10 eingebracht, dann ergeben sich breite Aussparungen 13, 14 und 15, die außerhalb der angeformten Befestigungsaufnahmen 30 in die Längsseiten 16 und 17 münden und nur im Bereich der Ansätze 31 unterbrochen sind. Die Durchbrüche 12 sind dabei vorzugsweise als Langlöcher ausgebildet, die sich mit ihren Längsabmessungen in Längsrichtung der Strom-Sammelschienen-Abschnitte 20 erstrecken.

Bei dem mittleren Strom-Sammelschienen-Abschnitt 20 ist gezeigt, daß der als Befestigungsschenkel 21 dienende Querschenkel auch zumindest teilweise in einen hinterschnittenen Teil der Aufnahme 11 eingeführt sein kann.

Zwischen benachbarten Strom-Sammelschienen-Abschnitten 20 sind am Isolierträger 10 senkrecht an seiner Oberseite abstehend die Trennstege 34 angeformt. Ein Trennsteg 34 kann auch die Längsseite des Isolierträgers 10 abschließen, wie an der Längsseite 16 gezeigt ist.

Wie am linken Strom-Sammelschienen-Abschnitt 20 der Fig. 3 gezeigt ist, kann der Klemmschenkel 23 auf der gegenüberliegenden Seite des Abstandsschenkels 22 als Raststeg 36 vorstehen, der auf der dem Isolierträger 10 abgekehrten Seite mit einer Rastschräge versehen sein kann. Damit wird der Anschluß der elektrischen Geräte mit Kontaktbügel und Federkontakten ermöglicht.

## Patentansprüche

1. Halter mit Strom-Sammelschienen für ein Sammelschienensystem zum Anschluß von elektrischen Geräten, der aus einem Isolierträger (10) mit in seine Oberseite eingebrachten Aufnahmen (11) für mehrere, in gleichmäßigen Abständen zueinander darin festgelegten Strom-Sammelschienen-Abschnitten (20) besteht, wobei der Isolierträger (10) mit seinen Aufnahmen (11) rechteckförmig und plattenförmig ausgebildet ist, mit seinen Längsseiten parallel zu den Strom-Sammelschienen-Abschnitten (20) verläuft und sich über den wesentlichen Teil der Länge der Strom-Sammelschienen-Abschnitte (20) erstreckt,
dadurch gekennzeichnet,
daß die Strom-Sammelschienen-Abschnitte (20) mit einem senkrecht zur Oberseite des Isolierträgers (10) gerichteten Abstandsschenkel (22) an der Oberseite des Isolierträgers (10) abstehen,
daß diese Abstandsschenkel (22) an ihren freien Enden in zur Oberseite des Isolierträgers (10) im Abstand stehende und parallel verlaufende Klemmschenkel (23) übergehen und
daß Geräte mit verstellbaren Kontaktbügeln oder Federkontakten mit den Strom-Sammelschiene-Abschnitten (20) mechanisch und elektrisch verbindbar sind.

2. Halter nach Anspruch 1,
dadurch gekennzeichnet,
daß die Abstandsschenkel (22) der Strom-Sammelschienen-Abschnitte (20) in gleichen Abständen zueinander angeordnet sind und
daß die Klemmschenkel (23) aller Strom-Sammelschienen-Abschnitte (20) zu derselben Längsseite (z.B. 17) des Isolierträgers (10) gerichtet sind.

3. Halter nach Anspruch 1 oder 2,
dadurch gekennzeichnet,
daß die Abstandsschenkel (22) der Strom-Sammelschienen-Abschnitte (20) in nutförmigen Aufnahmen (11) des Isolierträgers (10) mittels Paß- und/oder Preßsitz gehalten oder in diese bei der Herstellung des Isolierträgers (10) eingebettet sind.

4. Halter nach einem der Ansprüche 1 oder 2,
dadurch gekennzeichnet,
daß die dem Klemmschenkel (23) abgekehrten Enden der Abstandsschenkel (22) in zu den Klemmschenkeln (23) parallele Befestigungsschenkel (21) übergehen, die in den Aufnahmen (11) mit dem Isolierträger (10) verbunden, vorzugsweise verschraubt sind.

5. Halter nach Anspruch 4,
dadurch gekennzeichnet,
daß zumindest ein Teil des Befestigungsschenkels (21) in einem hinterschnittenen Bereich der Aufnahme (11) gehalten ist.

6. Halter nach einem der Ansprüche 1 bis 5,
dadurch gekennzeichnet,
daß die Strom-Sammelschienen-Abschnitte (20) bündig mit den Schmalseiten (18,19) des Isolierträgers (10) abschließen und
daß die Strom-Sammelschienen-Abschnitte (20) aneinandergereihter Halter außerhalb der Klemmschenkel (23) mittels Verbindern (26,33) elektrisch leitend verbindbar sind.

7. Halter nach einem der Ansprüche 1 bis 6,
dadurch gekennzeichnet,
daß mindestens zwischen benachbarten Strom-Sammelschienen-Abschnitten (20) Durchbrüche (12) in den Isolierträger (10) eingebracht sind, die über quer zu den Strom-Sammelschienen-Abschnitte (20) verlaufende Aussparungen (13,14,15) in der Unterseite des Isolierträgers (10) mit den Längsseiten (16,17) des Isolierträgers (10) verbunden sind.

8. Halter nach einem der Ansprüche 1 bis 7,
dadurch gekennzeichnet,
daß die Klemmschenkel (23) der Strom-Sammelschienen-Abschnitte (20) auf den gegenüberliegenden Seiten der Abstandsschenkel (22) als Raststege (36) vorstehen, die auf der dem Isolierträger (10) abgekehrten Seite mit Rastschrägen versehen sind.

## Claims

1. Bus bar support for a bus bar system for the connection of electrical appliances, which support includes an insulating carrier (10) having receiving holders (11), which are provided in the upper side of said carrier for the accommodation of a plurality of bus bar portions (20), which are secured therein at uniform spacings from one another, the insulating carrier (10) with its receiving holders (11) being rectangular and plate-shaped, having its longitudinal sides lying parallel to the bus bar portions (20) and extending over a substantial part of the length of the bus bar portions (20), characterised in that the bus bar portions (20) protrude at the upper side of the insulating carrier (10) with a projecting arm (22), which is orientated perpendicularly relative to the upper side of the insulating carrier (10), in that these projecting arms (22) extend, at their free ends, into clamping arms (23), which are spaced from the upper side of the insulating carrier (10) and lie parallel to one another, and in that appliances with adjustable contact collectors or spring contacts are mechanically and electrically connectable to the bus bar portions (20).

2. Support according to claim 1, characterised in that the projecting arms (22) of the bus bar portions (20) are disposed at identical spacings from one another, and in that the clamping arms (23) of all of the bus bar portions (20) are orientated towards the same longitudinal side (e.g. 17) of the insulating carrier (10).

3. Support according to claim 1 or 2, characterised in that the projecting arms (22) of the bus bar portions (20) are retained in groove-like receiving holders (11) of the insulating carrier (10) by means of a snug fit and/or a press fit, or they are embedded in such holders during the manufacture of the insulating carrier (10).

4. Support according to one of claims 1 or 2, characterised in that the ends of the projecting arms (22) remote from the clamping arm (23) extend into securing arms (21), which lie parallel to the clamping arms (23) and are connected, preferably screw-connected, to the insulating carrier (10) in the receiving holders (11).

5. Support according to claim 4, characterised in that at least a portion of the securing arm (21) is retained in an undercut region of the receiving holder (11).

6. Support according to one of claims 1 to 5, characterised in that the bus bar portions (20) terminate flush with the narrow sides (18, 19) of the insulating carrier (10), and in that the bus bar portions (20) are electrically conductively connectable by means of connectors (26, 33) to series-connected supports externally of the clamping arms (23).

7. Support according to one of claims 1 to 6, characterised in that openings (12) are provided in the insulating carrier (10) between at least adjacent bus bar portions (20), said openings communicating with the longitudinal sides (16, 17) of the insulating carrier (10) via the intermediary of recesses (13, 14, 15), which are formed in the underside of the insulating carrier (10) and extend transversely relative to the bus bar portions (20).

8. Support according to one of claims 1 to 7, characterised in that the clamping arms (23) of the bus bar portions (20) protrude, on the oppositely situated ends of the projecting arms (22), as locking ribs (36) which are provided with inclined locking means on the end remote from the insulating carrier (10).

## Revendications

1. Support de barres conductrices pour un système de barres conductrices pour le raccordement d'appareillages électriques, qui est constitué par un support isolant (10) avec des logements (11) prévus à sa face supérieure pour plusieurs tronçons (20) de barres conductrices y assujetties à des distances uniformes, le support isolant (10) avec ses logements (11) étant en forme de plaque rectangulaire dont les côtés longitudinaux sont parallèles aux tronçons (20) de barres conductrices et s'étend sur une partie substantielle de la longueur des tronçons (20) de barres conductrices,
caractérisé
par le fait que les tronçons (20) de barres conductrices sont issus à la face supérieure du support isolant (10) par une aile d'écartement (22) orientée perpendiculairement à la face supérieure du support isolant (10),
par le fait que ces ailes d'écartement (22) se transforment en leurs extrémités libres en ailes de serrage (23) situées à distance de la face supérieure du support isolant (10) et parallèles à celle-ci, et
par le fait que des appareillages à étriers de contact réglables ou à contacts à ressort peuvent être connectés par voie mécanique ou électrique aux tronçons (20) de barres conductrices.

2. Support suivant la revendication 1,
caractérisé
par le fait que les ailes d'écartement (22) des tronçons (20 de barres collectrices sont équidistantes les unes des autres et
par le fait que les ailes de serrage (23) de tous les tronçons (20) de barres collectrices sont dirigées vers le même côté longitudinal (par exemple 17) du support isolant (10).

3. Support suivant la revendication 1 ou la revendication 2,
caractérisé
par le fait que les ailes d'écartement (22) des tronçons (20) de barres conductrices sont maintenus par siège ajusté et/ou par ajustement pressé dans des logements (11) en forme d'encoche du support isolant (10) et sont enrobés dans ces logements lors de la fabrication du support isolant.

4. Support suivant l'une ou l'autres des revendications 1 et 2,
caractérisé
par le fait que les extrémités des ailes d'écartement (22) qui sont opposées à l'aile de serrage (23) se prolongent par des ailes de fixation (21) parallèles aux ailes de serrage (23), ailes de fixation (21) qui dans les logements (11) sont reliées au support isolant (10), de préférence par vissage.

5. Support suivant la revendication 4,
caractérisé
par le fait qu'au moins une partie de l'aile de fixation (21) est maintenue dans une portion en dépouille du logement (11).

6. Support suivant l'une quelconque des revendications de 1 à 5,
caractérisé
par le fait que les tronçons (20) de barres conductrices se terminent à fleur des petits côtés (18, 19) du support isolant (10) et
par le fait que les tronçons (20) de barres conductrices de supports accolés peuvent, en dehors des ailes de serrage (23) être connectés électriquement au moyen de connecteurs (26, 33).

7. Support suivant l'une quelconque des revendications de 1 à 6,
caractérisé
par le fait qu'au moins entre des tronçons (20) voisins de barres conductrices sont pratiqués des passages (12) dans le support isolant (10), passages qui par l'intermédiaire d'évidements (13, 14, 15) dans la face inférieure du support isolant (10), orientés transversalement par rapport aux tronçons (20) de barres conductrices, sont reliés aux côtés longitudinaux (16, 17) du support isolant (10).

8. Support suivant l'une quelconque des revendications de 1 à 7,
caractérisé
par le fait que les ailes de serrage (23) des tronçons (20) de barres collectrices font, sur les côtés opposés des ailes d'écartement (22), protubérance sous forme de nervures d'encliquetage (36), lesquelles du côté opposé au support isolant (10) présentent des biseaux d'encliquetage.
